# EUROPÄISCHE PATENTANMELDUNG

(11) **EP 1 069 513 A1**
(43) Veröffentlichungstag der Anmeldung: **17.01.2001**
(21) Anmeldenummer: 99113662.3
(22) Anmeldetag: 15.07.1999
(51) Int. Cl.: G06F 15/78, G06F 9/38

(54) **Programmgesteuerte Einheit**

(71) Anmelder: Infineon Technologies AG, 81541 München (DE)
(72) Erfinder: Siemers, Christian, 31139 Hildesheim (DE)
(74) Vertreter: Jannig, Peter

(57) **Zusammenfassung**

Es wird eine programmgesteuerte Einheit beschrieben, die sich dadurch auszeichnet, daß sie mehrere konfigurierbare Hardware-Blöcke zur Ausführung von Befehlen oder Befehlsfolgen aufweist. Dadurch kann erreicht werden, daß die programmgesteuerte Einheit auch diejenigen Phasen schnell durchlaufen kann, die bei den derzeit bekannten programmgesteuerten Einheiten nur vergleichsweise sehr langsam durchlaufen werden.

## Beschreibung

Die vorliegende Erfindung betrifft eine Vorrichtung gemäß dem Oberbegriff des Patentanspruchs 1, d.h. eine programmgesteuerte Einheit.

Programmgesteuerte Einheiten wie Mikroprozessoren, Mikrocontroller etc. sind seit vielen Jahren in unzähligen Ausführungsformen bekannt und bedürfen keiner näheren Erläuterung.

Es ist ebenfalls bekannt, daß ständig daran gearbeitet wird, immer leistungsfähigere programmgesteuerte Einheiten zu entwickeln. Ein besonderes Augenmerk gilt dabei der Geschwindigkeit, mit der programmgesteuerte Einheiten auszuführende Programme ausführen.

Die ersten programmgesteuerten Einheiten und auch noch die meisten der derzeit verwendeten programmgesteuerten Einheiten arbeiteten nach den sogenannten Von-Neumann-Prinzip. Dabei wird Befehl für Befehl aus einem Programmspeicher geholt und sequentiell abgearbeitet.

Besonders schnell arbeitende programmgesteuerte Einheiten dieser Art sind die sogenannten RISC-Prozessoren. Diese weisen einen reduzierten Befehlssatz auf und ermöglichen es dadurch, die Mikroprogramme, unter Verwendung welcher die abzuarbeitenden Befehle üblicherweise decodiert und ausgeführt werden, durch fest verdrahtete Hardware zu ersetzen. Dies wiederum gestattet es, besonders schnell und effizient arbeitende Befehls-Pipelines und Befehls-Ausführungseinheiten zu realisieren, so daß im Mittel bis zu ein Befehl pro Prozessortakt zur Ausführung gebracht werden kann. Wegen der nach wie vor vorhandenen Abarbeitungs- und Ergebnissequentialität kann mit RISC-Prozessoren jedoch nicht mehr als ein Befehl pro Prozessortakt ausgeführt werden.

Eine programmgesteuerte Einheit, bei welcher mehr als ein Befehl pro Prozessortakt ausgeführt werden kann, ist aus der EP 0 825 540 A1 bekannt. Bei der aus dieser Druckschrift bekannten programmgesteuerten Einheit werden die auszuführenden Befehle in einem konfigurierbaren Hardware-Block ausgeführt. Dieser konfigurierbare Hardware-Block ist so konfigurierbar, daß darin gleichzeitig mehrere Befehle (eine aus mehreren Befehlen bestehende Befehlsfolge) in einem Arbeitsgang ausgeführt werden können.

Solche programmgesteuerten Einheiten sind im Durchschnitt erheblich schneller als nach dem Von-Neumann-Prinzip arbeitende programmgesteuerte Einheiten.

Allerdings gilt dies "nur" im Durchschnitt. Bestimmte Befehlssequenzen, beispielsweise die bei Taskwechseln oder dem Einschieben von Interrupt-Service-Routinen auszuführenden Befehle lassen sich nicht oder allenfalls zu einem geringen Teil parallel ausführen.

Dies ist insbesondere bei programmgesteuerten Einheiten, von denen eine sofortige Reaktion auf Interrupt Requests erwartet wird, ein gravierender Nachteil.

Aber auch wenn - aus welchem Grund auch immer - pro Zeiteinheit viele Taskwechsel durchzuführen sind oder auf viele Interrupt Requests reagiert werden muß, ergeben sich Nachteile. Dann sinkt die Anzahl der durchschnittlich pro Zeiteinheit ausführbaren Befehle.

Der vorliegenden Erfindung liegt daher die Aufgabe zugrunde, eine programmgesteuerte Einheit zu schaffen, bei welcher auch Taskwechsel, das Einschieben von Interrupt Service Routinen und dergleichen Vorgänge mit erhöhter Geschwindigkeit durchführbar sind.

Diese Aufgabe wird erfindungsgemäß durch das im kennzeichnenden Teil des Patentanspruchs 1 beanspruchte Merkmal gelöst.

Demnach ist vorgesehen, daß die programmgesteuerte Einheit mehrere konfigurierbare Hardware-Blöcke zur Ausführung von Befehlen oder Befehlsfolgen aufweist.

In den mehreren konfigurierbaren Hardware-Blöcke lassen sich mit minimalem Aufwand gleichzeitig, aufeinanderfolgend oder ineinander verschachtelt verschiedene Befehlssequenzen wie beispielsweise verschiedene Tasks oder eine Task und eine Interrupt Service Routine ausführen. Der Aufwand, der bei Taskwechseln, dem Unterbrechen der Ausführung einer Task wegen der Ausführung einer Interrupt Service Routine und dergleichen Vorgängen wie etwa Unterprogrammaufrufen üblicherweise zu treiben ist (Speichern und/oder Zurückholen von zur Programmfortsetzung benötigten Daten), kann dadurch entfallen oder auf einen späteren Zeitpunkt verschoben werden.

Die erfindungsgemäße programmgesteuerte Einheit kann damit auch diejenigen Phasen mit sehr hoher Geschwindigkeit durchlaufen, die bei den derzeit bekannten programmgesteuerten Einheiten nur vergleichsweise sehr langsam durchlaufen werden.

Vorteilhafte Weiterbildungen der Erfindung sind den Unteransprüchen, der folgenden Beschreibung, und den Figuren entnehmbar.

Die Erfindung wird nachfolgend anhand eines Ausführungsbeispiels unter Bezugnahme auf die Figuren näher beschrieben. Es zeigen
- Figur 1: den Aufbau eines der bei der vorliegend betrachteten programmgesteuerten Einheit verwendeten konfigurierbaren Hardware-Blöcke, und
- Figur 2: den Aufbau des die Befehle ausführenden Teils der vorliegend betrachteten programmgesteuerten Einheit.

Bei der nachfolgend näher beschriebenen programmgesteuerten Einheit handelt es sich um einen Mikrocontroller. Es könnte sich aber auch um einen Mikroprozessor oder eine sonstige programmgesteuerte Einheit handeln.

Die vorliegend betrachtete programmgesteuerte Einheit zeichnet sich dadurch aus, daß sie mehrere konfigurierbare Hardware-Blöcke zur Ausführung von Befehlen oder Befehlsfolgen aufweist.

Jeder der konfigurierbaren Hardware-Blöcke ist so konfigurierbar, daß durch dessen Inbetriebnahme einzelne Befehle oder mehrere Befehle umfassende Befehlsfolgen in diesem ausgeführt werden.

Es werden nun zunächst ein möglicher Aufbau, die Funktion, und die Wirkungsweise eines konfigurierbaren Hardware-Blocks beschrieben.

Der nachfolgend näher betrachtete Hardware-Block ist dazu ausgelegt, abhängig von seiner Konfigurierung in einer Speichereinrichtung gespeicherte Daten auszulesen, die ausgelesenen Daten arithmetisch und/oder logisch zu verarbeiten und das Ergebnis der Verarbeitung repräsentierende Daten in die Speichereinrichtung einzuschreiben; er ist darüber hinaus in die Lage versetzbar, selbständig mit externer Hardware (bezogen auf den Hardware-Block) zu interagieren und wird dadurch zu einem nachfolgend als UCB (Universal Configurable Block) bezeichneten, universell einsetzbaren konfigurierbaren Hardware-Block.

Die Speichereinrichtung, aus welcher der UCB Daten ausliest und in welche der UCB Daten einschreibt, kann innerhalb oder außerhalb des UCB vorgesehen sein; im vorliegend betrachteten Beispiel wird die Speichereinrichtung durch ein aus mehreren Registern bestehendes register file gebildet.

Die Schreib- und Lesezugriffe des UCB auf die Speichereinrichtung erfolgen vorzugsweise getaktet. Der UCB selbst ist ein asynchrones Schaltnetz zwischen den Aus- und Eingängen der Speichereinrichtung; die Bestandteile des UCB sind asynchron miteinander gekoppelt.

Die Speichereinrichtung ist vorzugsweise von außerhalb des UCB vor Inbetriebnahme desselben initialisierbar; denkbar wäre auch, daß der UCB die Initialisierung der Speichereinrichtung selbst veranlaßt oder durchführt.

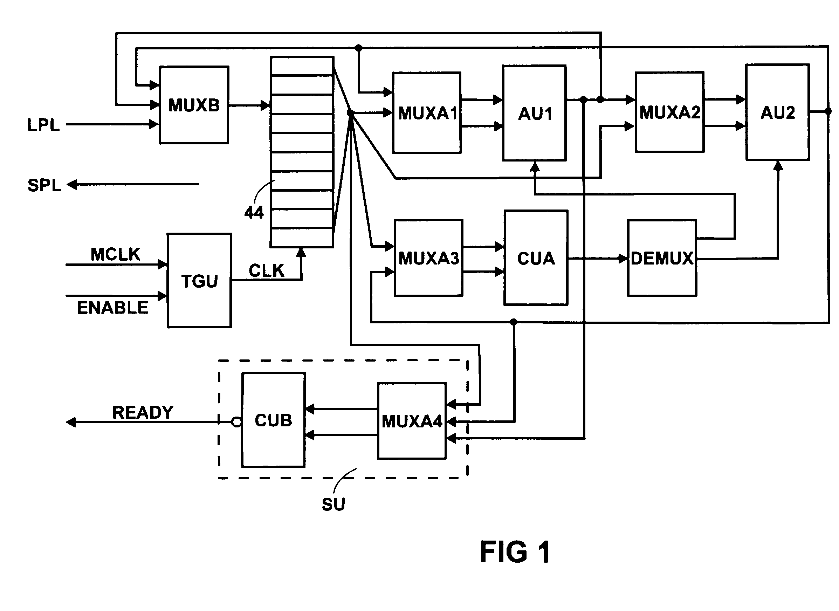

Der prinzipielle Aufbau des vorliegend näher betrachteten UCB ist in Figur 1 gezeigt.

Der gezeigte UCB weist eine oder mehrere arithmetische Einheiten AU1, AU2, eine oder mehrere Vergleichs-Einheiten eines ersten Typs CUA, einen oder mehrere Multiplexer eines ersten Typs MUXA1, MUXA2, MUXA3, einen oder mehrere Multiplexer eines zweiten Typs MUXB, einen oder mehrere Demultiplexer DEMUX, eine oder mehrere Taktgenerierungs-Einheiten TGU und eine oder mehrere Signalisierungs-Einheiten SU auf, wobei die Signalisierungs-Einheit SU im betrachteten Beispiel einen Multiplexer des ersten Typs MUXA4 und eine Vergleichs-Einheit eines zweiten Typs CUB umfaßt.

Das vorstehend bereits erwähnte register file, aus welchem der UCB die zu verarbeitenden Daten ausliest, und in welches der UCB die Verarbeitungsergebnisse einschreibt, ist in der Figur 1 mit dem Bezugszeichen 44 bezeichnet.

Die arithmetischen Einheiten AU1, AU2 weisen im betrachteten Beispiel zwei Eingangsanschlüsse, einen Ausgangsanschluß und einen Steueranschluß auf. Den arithmetischen Einheiten AU1, AU2 obliegt es, die über deren Eingangsanschlüsse eingegebenen Eingangssignale arithmetisch und/oder logisch zu verarbeiten. Die Operationen, die durch die arithmetischen Einheiten AU1, AU2 ausführbar sind, können fest vorgegeben oder individuell einstellbar (konfigurierbar) sein; sie umfassen insbesondere arithmetische Operationen wie Addition, Subtraktion, Multiplikation, Division etc., logische Verknüpfungen wie UND-Verknüpfungen, ODER-Verknüpfungen, Invertierung, Komplementbildung etc., arithmetische und logische Shift-Operationen, und Datentransfers (Durchschaltung eines der eingegebenen Signale zum Ausgangsanschluß). Die arithmetischen Einheiten AU1, AU2 sind nicht mit den Arithmetisch/Logischen Einheiten (ALUs) herkömmlicher programmgesteuerter Einheiten gleichzusetzen; die von ihnen ausführbaren Operationen sind begrenzt, so daß der Aufbau der arithmetischen Einheiten AU1, AU2 vergleichsweise einfach bleiben kann. Über die Steueranschlüsse der arithmetischen Einheiten AU1, AU2 ist festlegbar, ob die betreffende arithmetische Einheit die Operation, zu deren Ausführung sie vorgesehen ist, ausführt oder nicht. Dies ermöglicht die praktische Umsetzung von Befehlen, deren Ausführung vom Vorliegen einer bestimmten Bedingung abhängt. Die Bedingung kann beispielsweise der Zustand eines bestimmten Flags sein: ist das Flag gesetzt, wird die der betreffenden arithmetischen Einheit obliegende Aufgabe (beispielsweise eine Addition) ausgeführt, andernfalls nicht (oder umgekehrt). Derartige, nachfolgend als "konditionierte Befehle" bezeichnete Befehle ermöglichen es, die schwer handhabbaren bedingten Sprungbefehle zu eliminieren; sie werden später noch genauer beschrieben.

Die Vergleichs-Einheit des ersten Typs CUA weist im betrachteten Beispiel zwei Eingangsanschlüsse und einen Ausgangsanschluß auf. Der Vergleichs-Einheit CUA obliegt es insbesondere, die an deren Eingangsanschlüssen anliegenden Signale oder Daten Vergleichsoperationen zu unterziehen. Die Operationen, die durch die Vergleichs-Einheit CUA ausführbar sind, können fest vorgegeben oder individuell einstellbar (konfigurierbar) sein; sie umfassen beispielsweise Größer-, Größer/Gleich-, Kleiner-, Kleiner/Gleich-, Gleich-, und Ungleich-Vergleiche und die dauerhafte Ausgabe von "wahr" (TRUE) oder "unwahr" (FALSE) repräsentierenden Signalen. Der Ausgangsanschluß der Vergleichs-Einheit CUA ist über den nachfolgend noch genauer beschriebenen Demultiplexer DEMUX mit den Steueranschlüssen der arithmetischen Einheiten AU1, AU2 verbunden. Vom Ergebnis der in der Vergleichs-Einheit CUA ausgeführten Operation hängt es also ab, ob die arithmetischen Einheiten AU1, AU2 die Operation, zu deren Ausführung sie vorgesehen sind, ausführen oder nicht.

Die Multiplexer des ersten Typs MUXA1, MUXA2, MUXA3 und MUXA4, der Multiplexer des zweiten Typs MUXB, und der Demultiplexer DEMUX dienen zur Auswahl der Daten- und/oder Signalquellen und der Daten- und/oder Signalziele. Genauer gesagt dienen
- der Multiplexer MUXA1 zur Auswahl der Quellen der den Eingangsanschlüssen der arithmetischen Einheit AU1 zugeführten Daten und/oder Signale (mögliche Daten- und/oder Signalquellen sind im betrachteten Beispiel das register file 44 und andere arithmetische Einheiten),
- der Multiplexer MUXA2 zur Auswahl der Quellen der den Eingangsanschlüssen der arithmetischen Einheit AU2 zugeführten Daten und/oder Signale (mögliche Daten- und/oder Signalquellen sind im betrachteten Beispiel das register file 44 und andere arithmetische Einheiten),
- der Multiplexer MUXA3 zur Auswahl der Quellen der den Eingangsanschlüssen der Vergleichs-Einheit CUA zugeführten Daten und/oder Signale (mögliche Daten- und/oder Signalquellen sind im betrachteten Beispiel das register file 44 und die arithmetischen Einheiten),
- der Multiplexer MUXA4 zur Auswahl der Quellen der den Eingangsanschlüssen der Vergleichs-Einheit CUB zugeführten Daten und/oder Signale (mögliche Daten- und/oder Signalquellen sind im betrachteten Beispiel das register file 44 und die arithmetischen Einheiten),
- der Multiplexer MUXB zur Auswahl der Quellen der dem register file zugeführten Daten und/oder Signale (mögliche Daten- und/oder Signalquellen sind im betrachteten Beispiel die arithmetischen Einheiten, das register file selbst, und (im betrachteten Beispiel über eine sogenannte Load/Store-Pipeline LPL, SPL) die externe Hardware),
- der Demultiplexer DEMUX zur Auswahl des oder der Ziele für die von der Vergleichs-Einheit CUA ausgegebenen Daten und/oder Signale (mögliche Daten- und/oder Signalziele sind im betrachteten Beispiel die Steueranschlüsse der arithmetischen Einheiten).

Die Multiplexer des ersten Typs weisen mehrere Eingangsanschlüsse und zwei Ausgangsanschlüsse auf, die Multiplexer des zweiten Typs mehrere Eingangsanschlüsse und einen Ausgangsanschluß, und der Demultiplexer einen Eingangsanschluß und mehrere Ausgangsanschlüsse.

Die Multiplexer und der Demultiplexer weisen in der Figur 1 nicht gezeigte Steueranschlüsse auf, über welche einstellbar ist, welche Eingangsdaten und/oder -signale auf welche Ausgangsanschlüsse durchgeschaltet werden. Die Anzahl der Steueranschlüsse hängt von der erforderlichen Anzahl der verschiedenen Zuordnungs-Kombinationen ab; bei 32 Eingangsanschlüssen und zwei Ausgangsanschlüssen sind beispielsweise 10 Steueranschlüsse erforderlich, um an beliebigen Eingangsanschlüssen anliegende Signale und/oder Daten auf beliebige Ausgangsanschlüsse durchschalten zu können.

Durch die arithmetischen Einheiten AU1, AU2, die Vergleichs-Einheit des ersten Typs CUA, die Multiplexer des ersten Typs MUXA1, MUXA2, MUXA3, den Multiplexer des zweiten Typs MUXB, und den Demultiplexer DEMUX wird der UCB in die Lage versetzt, in einer Speichereinrichtung (im register file 44) gespeicherte Daten auszulesen, die ausgelesenen Daten arithmetisch und/oder logisch zu verarbeiten und das Ergebnis der Verarbeitung repräsentierende Daten in die Speichereinrichtung (das register file 44) einzuschreiben.

Wie eingangs bereits erwähnt wurde, ist der UCB darüber hinaus in die Lage versetzbar, selbständig mit externer Hardware zu interagieren. Die Interaktion besteht im betrachteten Beispiel darin, daß
- der UCB die Speichereinrichtung im Ansprechen auf bestimmte Ereignisse zur Übernahme von von der externen Hardware bereitgestellten Daten veranlassen kann, und
- der UCB Daten und/oder Signale an die externe Hardware ausgeben kann.

Die externe Hardware besteht im betrachteten Beispiel aus anderen UCBs und/oder einer über- oder nebengeordneten Steuereinrichtung und/oder sonstige Komponenten des den UCB enthaltenden Systems (beispielsweise Sensoren, A/D-Wandlern, D/A-Wandlern, Timern, Interrupt Controllern, zu steuernden Einrichtungen etc.).

Die Interaktion des UCB mit externer Hardware wird im wesentlichen (aber nicht ausschließlich) durch die mindestens eine Taktgenerierungs-Einheit TGU und die mindestens eine Signalisierungs-Einheit SU bewirkt.

Die mindestens eine Taktgenerierungs-Einheit TGU und die mindestens eine Signalisierungs-Einheit SU repräsentieren eine Schnittstelle zu der externen Hardware. Wie später noch genauer verstanden werden wird, kann der UCB damit eigenständig (ohne Zwischenschaltung einer übergeordneten Steuereinrichtung) mit der externen Hardware interagieren.

Der Taktgenerierungs-Einheit TGU obliegt es, basierend auf von innerhalb und/oder außerhalb des UCB stammenden Signalen und/oder Daten ein periodisches oder nicht-periodisches Taktsignal zu generieren. Die Eingangssignale sind im betrachteten Beispiel ein periodischer Master-Takt MCLK des den UCB enthaltenden Systems und ein Enable-Signal ENABLE einer externen Hardware-Komponente, mit welcher der UCB kooperieren soll. Grundsätzlich können jedoch beliebig viele und von beliebigen Quellen stammende Eingangssignale zur Taktsignalerzeugung herangezogen werden. Zur Erhöhung der Flexibilität kann vorgesehen werden, der Taktgenerierungs-Einheit TGU eingangsseitig einen Multiplexer vorzuschalten; dann können die der Taktgenerierungs-Einheit zugeführten Eingangssignale applikationsspezifisch aus einer großen Anzahl potentieller Eingangssignale ausgewählt werden. Das von der Taktgenerierungs-Einheit TGU generierte Taktsignal CLK wird im betrachteten Beispiel als Taktsignal für eine im betrachteten Beispiel durch das register file 44 gebildete Speichereinrichtung verwendet; das register file ist in diesem Fall dazu ausgelegt, das Einschreiben von Daten und/oder das Ausgeben von Daten im Takt des Taktsignals durchzuführen. Dadurch können
- von externer Hardware (beispielsweise von einem A/D-Wandler) direkt oder indirekt (beispielsweise über die bereits erwähnte Load/Store-Pipeline LPL, SPL) bereitgestellte Daten im Takt des von der Taktgenerierungs-Einheit erzeugten Taktsignals, also zu genau definierten Zeitpunkten (beispielsweise auf ein das Wandlungsende des A/D-Wandlers signalisierendes Signal hin) in das register file 44 übernommen werden und/oder
- im register file 44 gespeicherte Daten direkt oder indirekt (beispielsweise über die Load/Store-Pipeline LPL, SPL) an externe Hardware (beispielsweise an einen externen Speicher) ausgegeben werden.

Die Signalisierungs-Einheit SU besteht im betrachteten Beispiel aus einem Multiplexer des ersten Typs MUXA4 und einer Vergleichs-Einheit eines zweiten Typs CUB; ihr obliegt es, basierend auf von innerhalb und/oder außerhalb des UCB stammenden Signalen ein oder mehrere bestimmte Zustände oder Ereignisse signalisierende, nachfolgend als Meldesignale bezeichnete Signale zu erzeugen. Bei dem in Figur 1 gezeigten UCB wird nur 1 Meldesignal erzeugt. Dieses eine Meldesignal ist das Ausgangssignal der Vergleichs-Einheit CUB, welche die zwei Ausgangssignale des der Vergleichs-Einheit CUB eingangsseitig vorgeschalteten Multiplexers MUXA4 vergleicht. Durch das Vorsehen des Multiplexers MUXA4 können die der Meldesignalerzeugung zugrundezulegenden Signale applikationsspezifisch aus einer großen Anzahl von hierfür verwendbaren Signalen ausgewählt werden. Die der Meldesignalerzeugung zugrundelegbaren Signale umfassen im betrachteten Beispiel unter anderem ein Ausgangssignal der arithmetischen Einheit AU2 und ein Ausgangssignal des register file 44; zusätzlich oder alternativ können der Meldesignalerzeugung beliebige andere Signale zugrundegelegt werden.

Das oder die Meldesignale, die durch die Signalisierungs-Einheit erzeugt werden, werden verwendet, um externer Hardware bestimmte Zustände oder Ereignisse zu signalisieren. Damit kann beispielsweise durch ein READY-Signal das Ende der Ausführung der durch den UCB auszuführenden Operationen signalisiert werden. Wenn die Operationen, die der UCB auszuführen hat, die Operationen sind, die während eines Durchlaufs einer wiederholt zu durchlaufenden Schleife auszuführen sind, so kann durch das Meldesignal auch das Ende der durchzuführenden Schleifendurchläufe signalisiert werden. Die Vergleichs-Einheit CUB kann nämlich unter anderem auch als Schleifenzähler verwendet werden, durch den signalisiert wird, wenn die vom UCB auszuführenden Operationen eine der durchzuführenden Schleifendurchläufe entsprechende Anzahl von Malen ausgeführt wurden. Die Meldesignale können unter anderem auch als Interrupt Requests verwendet werden.

Die Vergleichs-Einheit CUB entspricht übrigens weitestgehend der Vergleichs-Einheit des ersten Typs CUA; unterschiedlich ist im wesentlichen "nur", daß die Standard-Einstellung des Pegels des Ausgangssignals FALSE sein kann, und daß die Standard-Einstellung des Pegels des Ausgangssignals vorzugsweise applikationsspezifisch einstellbar ist.

Der in Figur 1 gezeigte und unter Bezugnahme darauf beschriebene UCB ist nur zur Erläuterung des grundlegenden Aufbaus gedacht. In der Praxis werden die arithmetische Einheiten, die Vergleichs-Einheiten, die Multiplexer, die Demultiplexer, und gegebenenfalls auch die Taktgenerierungs-Einheit und die Signalisierungs-Einheit in einer deutlich größeren Anzahl vorgesehen werden als es beim Beispiel gemäß Figur 1 der Fall ist. Der UCB ist vorzugsweise so dimensioniert, daß normalerweise sämtliche Operationen, die von einem später noch näher beschriebenen, sogenannten Hyperblock zu bewirken sind, auf ein Mal in ihn einprogrammierbar sind.

Die im UCB vorgesehenen Daten- und/oder Signalpfade können durch einzelne Leitungen oder durch Busse gebildet werden, wobei es sich als vorteilhaft erweisen kann, wenn in den einzelnen Komponenten des UCB oder im Bus-System konfigurierbar ist, wie viele und/oder welche Busleitungen zu berücksichtigen sind.

Hardware-Blöcke nach Art der Figur 1 können und werden vorzugsweise basierend auf Befehlen oder Befehlsfolgen konfiguriert. Setzt man Befehle oder Befehlsfolgen in entsprechende Hardware-Block-Strukturen um, so ist der so konfigurierte Hardware-Block als Ablaufeinheit für sequentielle Befehlsfolgen nutzbar. Diese Form der Hardware-Block-Konfigurierung wird nachfolgend auch als struktur-prozedurale Programmierung bezeichnet.

Ausgangspunkt für die struktur-prozedurale Programmierung kann ein in einer Hochsprache wie beispielsweise C, C++ etc. geschriebenes Programm sein. Dieses Programm wird durch einen Compiler übersetzt, und der dabei erhaltene Code wird (vorzugsweise hyperblock-weise) in Strukturinformationen umgesetzt, basierend auf welcher der zu konfigurierende Hardware-Block konfigurierbar ist. Was unter einem Hyperblock zu verstehen ist, wird später noch genauer beschrieben werden.

Ausgangspunkt für die struktur-prozedurale Programmierung kann selbstverständlich auch ein in Assembler geschriebenes oder sonstiges Programm sein. Die Art und Weise der Programmierung (funktional, imperativ, objekt-orientiert, ...) ist ebenfalls keinen Einschränkungen unterworfen.

Es erweist sich als vorteilhaft, wenn der in die Strukturinformation umzusetzende Code, also die durch den Compiler oder auf andere Art und Weise erzeugten Maschinenbefehle im wesentlichen ausschließlich fünf Maschinenbefehl-Typen, nämlich unkonditionierte Befehle, konditionierte Befehle, Predicate-Befehle, Loopxx-Befehle, und Intxx-Befehle umfassen. Dann lassen sich in der Regel besonders lange (besonders viele Befehle enthaltende) Befehls-Blöcke mit nur einem Eintrittspunkt und nur einem Austrittspunkt bilden. Die Generierbarkeit von möglichst langen Befehls-Blöcken mit nur einem Eintrittspunkt und nur einem Austrittspunkt ist sehr bedeutsam, weil sich Befehle, die ein- und dem selben Befehls-Block angehören, und zwar nur solche Befehle, als eine Einheit (als eine sich aus mehreren Befehlen zusammensetzende Makroinstruktion) behandeln lassen, die in eine gemeinsame Hardware-Block-Struktur umgesetzt und auf ein Mal ausgeführt werden kann. Legt man der Konfigurierung eines Hardware-Blocks jeweils genau eine solche Einheit zugrunde (und ist der Hardware-Block groß genug, um so konfiguriert werden zu können), so läßt sich die Anzahl der zur Abarbeitung eines Programms erforderlichen Umstrukturierungen bzw. Umkonfigurierungen des Hardware-Blocks auf ein Minimum reduzieren. Die Befehls-Blöcke, deren Generierung derzeit favorisiert wird, und deren Bildung durch die vorstehend genannten Befehlsgruppen auch möglich ist, sind die vorstehend bereits erwähnten Hyperblöcke.

Hyperblöcke zeichnen sich insbesondere dadurch aus, daß bedingte Sprungbefehle unter Anwendung der nachfolgend noch näher beschriebenen sogenannten if-Konversion eliminiert werden.

Bezüglich weiterer Einzelheiten zu den Hyperblöcken, anderen Befehls-Blöcken und damit in Zusammenhang stehenden Themen wird auf
- Wen-Mei W. Hwu et al.: "Compiler Technology for Future Microprocessors", Invited Paper in Proceedings of the IEEE, Vol. 83 (12), Dezember 1995, Special Issue on Microprocessors, Seiten 1625 bis 1640,
- Henk Neefs, Jan van Campenhout: "A Microarchitecture for a Fixed Length Block Structured Instruction Set Architecture", Proceedings of the Eighth IASTED International Conference on Parallel and Distributed Computing and Systems, Seiten 38 bis 42, IASTED/ACTA Press, 1996, und
- Richard H. Littin, J.A. David McWha, Murray W. Pearson, John G. Cleary: "Block Based Execution and Task Level Parallelism", in: John Morris (Ed.), "Computer Architecture 98", Proceedings of the 3^{rd} Australasian Computer Architecture Conference, ACAC'98, Perth, 2-3 February 1998, Australian Computer Science Communications, Vol. 20, No. 4, Seiten 57 bis 66, Springer, Singapore,
verwiesen.

Wie vorstehend bereits angedeutet wurde, ist ein Hardware-Block vorzugsweise so dimensioniert, daß dessen Konfigurierung hyperblock-weise erfolgen kann, also nach Möglichkeit immer ganze Hyperblöcke in entsprechende Hardware-Block-Strukturen umgesetzt werden können.

Die vorstehend erwähnten unkonditionierten Befehle sind Befehle zur bedingungslosen Bearbeitung von Daten einschließlich der Kopie von Daten von einem Speicherbereich in einen anderen (von einem Register in ein anderes). Diese Befehle werden im folgenden als normale Befehle bezeichnet. Sie umfassen arithmetische und logische Verknüpfungen zwischen Daten zu neuen Werten und die sogenannten Move-Befehle zur Kopie von Registerinhalten. Das allgemeine Format dieser Befehle lautet: <Mnemonic> <Ziel-Register>, <Quellen-Register 1>, <Quellen-Register 2>. Zur Durchführung eines solchen Befehls wird eine arithmetische Einheit des Hardware-Blocks benötigt.

Die konditionierten Befehle sind Befehle zur Bearbeitung von Daten bei Vorliegen einer bestimmten Bedingung (Kondition). Die durch diese Befehle auszuführenden Aktionen bzw. Operationen entsprechen den durch die normalen Befehle ausführbaren Aktionen bzw. Operationen, wobei die Ausführung der betreffenden Aktionen jedoch von einer vorbestimmten Bedingung abhängt. Ist die Bedingung erfüllt, wird die durch den Befehl spezifizierte Aktion ausgeführt, anderenfalls wird nichts ausgeführt (der betreffende Befehl wirkt dann wie ein NOP-Befehl). Diese Befehle werden im folgenden als bedingte Befehle bezeichnet. Das allgemeine Format dieser Befehle lautet: <Mnemonic>p <Ziel-Register>, <Quellen-Register 1>, <Quellen-Register 2> <p-Flag>, wobei durch das "p" am Ende des Mnemonic die Abhängigkeit der Befehlsausführung von einer Bedingung signalisiert wird, und wobei die Bedingung durch einen bestimmten Zustand eines bestimmten Flags (des "p-Flag") definiert wird. Zur Durchführung der durch einen solchen Befehl spezifizierten Aktion wird eine arithmetische Einheit des Hardware-Blocks benötigt; zur Überprüfung der Bedingung wird eine Vergleichs-Einheit benötigt, deren Ausgang mit dem Steuereingang der arithmetischen Einheit verbunden ist.

Die Predicate-Befehle sind Befehle zur Festlegung des Zustandes des in den bedingten Befehlen verwendeten Bedingungs-Flags (des p-Flags). Die Festlegung erfolgt dabei während des Programmablaufs basierend auf einem Vergleich von zwei Daten. Diese Befehle werden im folgenden als pxx-Befehle bezeichnet. Das allgemeine Format dieser Befehle lautet: pxx <Quellen-Register 1>, <Quellen-Register 2>, <p-Flag>, wobei xx die durchzuführende Vergleichsoperation spezifiziert und durch gt (größer als), ge (größer oder gleich), eq (gleich), ne (ungleich), le (kleiner oder gleich) oder lt (kleiner als) zu ersetzen ist. Die pxx-Befehle sind mit den üblichen Branch-Befehlen vergleichbar und dienen zum Ersatz derselben durch die Anwendung der sogenannten if-Konversion (siehe hierzu den vorstehend bereits erwähnten Aufsatz von Wen-Mei W. Hwu et al.).

Die Loopxx-Befehle sind zur Schleifenwiederholung dienende Befehle am Ende eines Hyperblocks. Sie veranlassen einen Rücksprung an den Anfang des betreffenden Hyperblocks, falls eine im Befehl spezifizierte Bedingung erfüllt ist; sie veranlassen eine durch die Signalisierungs-Einheit SU vorzunehmende Generierung eines READY-Signals, wenn die Bedingung nicht mehr erfüllt ist. Die Bedingung ist durch ein bestimmtes Ergebnis einer Vergleichsoperation definiert. Das allgemeine Format dieser Befehle lautet: loopxx <Quellen-Register 1>, <Quellen-Register 2>, wobei xx die durchzuführende Vergleichsoperation spezifiziert.

Die Intxx-Befehle sind Befehle zur Erzeugung von an die externe Hardware auszugebenden Signalen. Sie stellen eine Verallgemeinerung der Loopxx-Befehle dar: damit können aus beliebigen Anlässen beliebigen Bedeutungsinhalt aufweisende Signale an beliebige externe Komponenten des den UCB enthaltenden Systems ausgegeben werden. Das allgemeine Format dieser Befehle lautet: intxx <Quellen-Register 1>, <Quellen-Register 2>, <int_Signal>, wobei xx die durchzuführende Vergleichsoperation spezifiziert, und wobei "int_Signal" das (durch die Signalisierungs-Einheit SU) zu erzeugende und auszugebende Meldesignal spezifiziert.

Nachfolgend wird der Vollständigkeit kurz erläutert, wie die Umsetzung der Befehle in eine entsprechende UCB-Struktur (die Selbstkonfigurierung des UCB aus einem sequentiellen Instruktionsstrom) erfolgen kann. Da hier nur das grundlegende Prinzip der Umsetzung erläutert werden soll, beschränken sich die folgenden Ausführungen auf die Umsetzung der normalen, bedingten, und pxx-Befehle. Die anderen Befehle, genauer gesagt die Loopxx- und Intxx-Befehle erfordern unter Umständen eine Sonderbehandlung, die jedoch bei Kenntnis des nachfolgend beschriebenen Vorgehensweise keine Schwierigkeit bereitet.

Der UCB, genauer gesagt dessen Teileinheiten (arithmetische Einheiten, Vergleichs-Einheiten, Multiplexer, Demultiplexer, ...) und die Verbindungen zwischen den Teileinheiten werden im betrachteten Beispiel durch die gewünschte Konfiguration repräsentierende Konfigurations-Daten (Konfigurations-Bits) konfiguriert. Dementsprechend ist es die Aufgabe des nachfolgend beschriebenen Umsetzungsverfahrens, (vorzugsweise definiert vorbesetzte) Konfigurations-Bits bzw. einen diese enthaltenden Bitstrom basierend auf den der UCB-Konfiguration zugrundezulegenden Befehlen oder Befehlsfolgen zu generieren bzw. modifizieren.

Insbesondere wenn die Teileinheiten des UCB konfigurierbar sind, werden diesen (physikalischen) Teileinheiten logische bzw. virtuelle Einheiten zugeordnet, wobei die virtuellen Einheiten die verschiedenen Funktionen der physikalischen Teileinheiten angeben. Der physikalischen Teileinheit "erste arithmetische Einheit AU1" können - sofern diese konfigurierbar ist - beispielsweise die virtuellen Einheiten Addierer, Subtrahierer etc. zugeordnet sein. Eine virtuelle Einheit ist genau einer physikalischen Teileinheit zugeordnet ist, aber einer physikalischen Teileinheit können mehrere virtuelle Einheiten zugeordnet sein. Sämtliche virtuellen Einheiten werden vorzugsweise in einer Tabelle oder Liste verwaltet. Die jeweiligen Einträge enthalten neben Informationen zu den virtuellen Einheiten selbst auch Information darüber, welcher physikalischen Teileinheit die jeweiligen virtuellen Einheiten zugeordnet sind, über welche Konfigurations-Bits und wie diese physikalische Teileinheit gegebenenfalls konfiguriert werden muß, um ihr die durch die virtuelle Einheit repräsentierte Funktion zu verleihen.

Die Umsetzung einer Instruktion in eine UCB-Strukturierungsinformationen erfolgt im wesentlichen in drei Schritten.

Im ersten Schritt wird zunächst ermittelt, welcher Typ von virtueller Einheit (Addierer, Subtrahierer, Multiplizierer ...) zur Ausführung der umzusetzenden Instruktion benötigt wird, und ob eine solche virtuelle Einheit noch verfügbar ist. Ist noch eine virtuelle Einheit des benötigten Typs frei, so wird diese oder eine von diesen zur Ausführung der betreffenden Instruktion ausgewählt. Sodann erfolgen die Konfiguration oder deren Vorbereitung und eine Reservierung der der ausgewählten virtuellen Einheit zugeordneten physikalischen Teileinheit. Zur Konfiguration werden einfach die der betreffenden physikalischen Teileinheit zugeordneten Konfigurations-Bits gesetzt oder zurückgesetzt; dies bereitet keine Schwierigkeiten, denn die Informationen, welcher physikalischen Teileinheit die ausgewählte virtuelle Einheit zugeordnet ist, über welche Konfigurations-Bits und wie diese physikalische Teileinheit gegebenenfalls zu konfigurieren ist, werden ja zusammen mit der virtuellen Einheit verwaltet. Die Reservierung der der ausgewählten virtuellen Einheit zugeordneten physikalischen Teileinheit ist notwendig, um zu verhindern, daß die betreffende physikalische Teileinheit mehrfach verwendet werden kann. Im betrachteten Beispiel wird dies dadurch bewerkstelligt, daß nach jeder Vergabe einer physikalischen Teileinheit für einen bestimmten Zweck sämtliche virtuellen Einheiten, die der betreffenden physikalischen Teileinheiten zugeordnet werden, gesperrt werden.

Bei pxx-Befehlen kann es je nach dem Aufbau des UCB erforderlich sein, abhängig vom p-Flag eine ganz bestimmte Vergleichs-Einheit auszuwählen.

Bei bedingten Befehlen wirkt sich das p-Flag nur dann auf die Auswahl der virtuellen/physikalischen Einheit(en) aus, wenn bestimmte Instruktionen nur mit bestimmten Flags möglich sind, also keine vollständige Orthogonalität in dem Teilbefehlssatz für bedingte Befehle vorhanden ist.

Im zweiten Schritt der UCB-Konfigurierung werden die den ausgewählten physikalischen Teileinheiten vor- und/oder nachgeschalteten Multiplexer konfiguriert, um die Daten und/oder Signalquellen und die Daten- und/oder Signalziele entsprechend den Festlegungen in den umzusetzenden Instruktionen einzustellen. Die Multiplexer und das Format der umzusetzenden Instruktionen sind im Idealfall so aneinander angepaßt, daß die die Daten- und/oder Signalquellen und die die Daten- und/oder Signalziele festlegenden Teile der Instruktionen unverändert als die die Multiplexer konfigurierenden Konfigurations-Bits übernommen werden können. Ist dies - aus welchem Grund auch immer - nicht möglich oder gewünscht, so können die die Multiplexer konfigurierenden Konfigurations-Bits beispielsweise einer Tabelle entnommen werden, in welcher die Zuordnung zwischen den die Daten- und/oder Signalquellen und die Daten- und/oder Signalziele festlegenden Teilen der Instruktionen und den die Multiplexer konfigurierenden Konfigurations-Bits gespeichert ist. Die Konfigurierung, die erforderlich ist, um eine Verbindung zu einer bestimmten Daten- und/oder Signalquelle und/oder zu einem bestimmten Daten- und/oder Signalziel herzustellen, ist vorzugsweise für alle Multiplexer gleich.

Eine gesonderte Behandlung ist notwendig, wenn die der auszuführenden Operation zugrundezulegenden Daten zumindest teilweise aus einer im Instruktions-Code enthaltenen Konstanten bestehen. Dann muß
- ein freies (Konstanten-)Register gesucht werden,
- dieses Register als Daten- und/oder Signalquelle verwendet werden, und
- die im Instruktions-Code enthaltene Konstante vor der Inbetriebnahme des UCB in das ausgewählte Register eingeschrieben werden.

Es kann vorgesehen werden, vorab zu überprüfen, ob die betreffende Konstante schon in einem (Konstanten-)Register gespeichert ist. Ergibt sich dabei, daß bereits ein die Konstante enthaltendes (Konstanten-)Register existiert, so kann dieses schon existierende (Konstanten-)Register als Daten- und/oder Signalquelle verwendet werden.

Zu beachten ist ferner, daß die umzusetzenden Instruktionen unterschiedlich viele Daten- und/oder Signalquellen und Daten- und/oder Signalziele aufweisen.

Als Daten- und/oder Signalziel verwendete Register werden übrigens als belegt markiert, da innerhalb eines Hyperblocks keine Zweitbelegung zulässig ist und durch ein sogenanntes (Runtime) Register Renaming, einer aus superskalaren Architekturen bekannten Technologie, verhindert werden muß.

Nach diesem (für alle Befehle gemeinsamen) zweiten Schritt werden für einzelne Befehlstypen spezielle Teilschritte eingefügt, die sich aus den jeweiligen Besonderheiten ergeben.

Unter anderem muß bei bedingten Befehlen die das Vorliegen der Bedingung überprüfende Vergleichs-Einheit ermittelt werden und deren Ausgangssignal über den zugehörigen Demultiplexer auf die die Operation ausführende arithmetische Einheit geschaltet werden. Ferner ist zu berücksichtigen, welcher Art die Bedingung ist.

Bei bedingten Move-Befehlen ist zusätzlich dafür Sorge zu tragen, daß der Inhalt des Zielregisters bei Nicht-Ausführung des Befehls nicht verändert wird.

Nach dem zweiten Schritt der UCB-Konfigurierung könnte diese beendet und der UCB gestartet werden. Dies geschieht vorzugsweise jedoch erst nach der Ausführung des nachfolgend beschriebenen dritten Schrittes.

In diesem dritten Schritt der UCB-Konfigurierung wird ein sogenanntes data forwarding realisiert. Dabei werden als Daten- und/oder Signalquellen nicht stur die in den Instruktionen angegebenen Daten- und/oder Signalquellen verwendet, sondern nach Möglichkeit die physikalische Teileinheit, die die betreffende Daten- und/oder Signalquelle innerhalb des jeweiligen Hyperblocks zuvor zu beschreiben hatte. Dies erweist sich in zweifacher Hinsicht als vorteilhaft: einerseits, weil eventuell weniger Register benötigt werden (wenn die in der Instruktion angegebene Daten- und/oder Signalquelle nicht als solche verwendet wird, muß sie auch nicht beschrieben werden und kann gegebenenfalls ganz weggelassen werden), und andererseits, weil die benötigten Daten bei Abholung von der diese erzeugenden Teileinheit (beispielsweise einer arithmetischen Einheit) früher verfügbar sind als wenn sie zuerst in ein Register geschrieben und von dort abgeholt werden müssen. Das data forwarding kann bei allen Befehlen zur Anwendung kommen und erweist sich im Durchschnitt als enormer Vorteil.

Ein wie beschrieben aufgebauter und betreibbarer konfigurierbarer Hardware-Block kann als Befehlsausführungseinheit in einer programmgesteuerten Einheit verwendet werden.

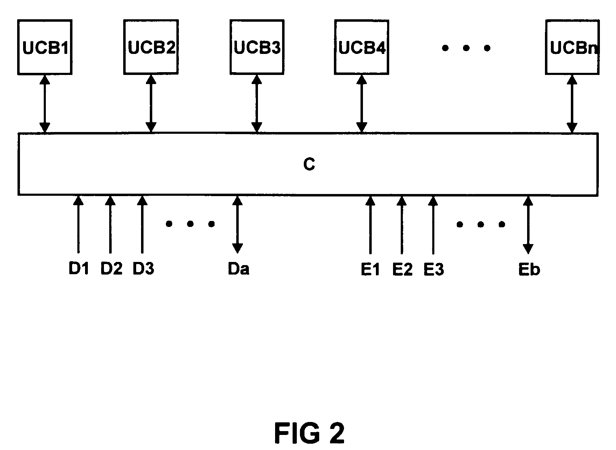

Wie eingangs bereits erwähnt wurde, weist die vorliegend betrachtete programmgesteuerte Einheit gleich mehrere konfigurierbare Hardware-Blöcke zur Ausführung von Befehlen oder mehrere Befehle umfassenden Befehlsfolgen auf. Ein Blockschaltbild des die Befehle ausführenden Teils der vorliegend betrachteten programmgesteuerten Einheit ist in Figur 2 gezeigt.

Die Befehlsausführungs-Einheit besteht aus einer Vielzahl von konfigurierbaren Hardware-Blöcken UCB1, UCB2, ... UCBn und einer diese steuernden Steuereinrichtung C.

Die Hardware-Blöcke UCB1 bis UCBn sind konfigurierbare Hardware-Blöcke der vorstehend beschriebenen Art. Obgleich sich derart aufgebaute und betreibbare Hardware-Blöcke ganz hervorragend für den Einsatz zum Ausführen von Befehlen oder Befehlsfolgen in programmgesteuerten Einheiten eignen, besteht keine Einschränkung darauf, genau diese Hardware-Blöcke zu verwenden. Es können auch beliebige andere konfigurierbare Hardware-Blöcke, beispielsweise Hardware-Blöcke der in der EP 0 825 540 A1 beschriebenen Art verwendet werden. Bei den Hardware-Blöcken UCB1 bis UCBn kann es sich auch um unterschiedlich aufgebaute und/oder unterschiedlich leistungsfähige Hardware-Blöcke handeln.

Die Steuereinrichtung C bestimmt, welche Befehle oder Befehlsfolgen durch welche Hardware-Blöcke auszuführen sind und konfiguriert diese entsprechend. Die Steuereinrichtung C selbst ist ebenfalls konfigurierbar. Dadurch kann durch den Benutzer der programmgesteuerten Einheit individuell (vorzugsweise programmgesteuert) festgelegt werden, unter welchen Umständen (insbesondere im Ansprechen auf welche Ereignisse, wann und wie lange) welche Hardware-Blöcke wofür und in welcher Weise zu benutzen sind.

Die Steuereinrichtung C weist Eingangsanschlüsse D1 bis Da und E1 bis Eb auf.

Über die Eingangsanschlüsse D1 bis Da werden der Steuereinrichtung C Befehle repräsentierende Daten übermittelt und gegebenenfalls Steuer- und/oder Statusinformationen ausgetauscht; über die Eingangsanschlüsse E1 bis Eb werden der Steuereinrichtung C externe (außerhalb der programmgesteuerten Einheit auftretende) und/oder interne Ereignisse signalisiert.

Die die Befehle repräsentierenden Daten werden der Steuereinrichtung C direkt oder indirekt (über in der Figur 2 nicht gezeigte Bestandteile der programmgesteuerten Einheit wie beispielsweise eine Befehlshol-Einheit und/oder eine Decodier-Einheit) aus einem in der Figur 2 nicht gezeigten Programmspeicher zugeführt. Die zugeführten Daten können dabei "nur" decodierte Einzelbefehle sein, die in der Steuereinrichtung C erst noch zusammengefaßt und in zur Konfiguration eines Hardware-Blocks geeignete Konfigurationsdaten bzw. Konfigurationsdaten-Folgen umgesetzt werden müssen. Es kann sich aber auch schon um zur Konfigurierung der Hardware-Blöcke geeignete Konfigurationsdaten handeln.

Die internen und/oder externen Ereignisse, die der Steuereinrichtung C über die Eingangsanschlüsse E1 bis Eb signalisiert werden, sind im betrachteten Beispiel intern oder extern generierte Interrupt Requests, können aber auch beliebige andere Ereignisse sein.

Die Steuereinrichtung C legt abhängig von den über die Eingangsanschlüsse D1 bis Da und E1 bis Eb erhaltenen Daten und Signalen und abhängig von ihrer Konfiguration fest, welche Maßnahmen unter den jeweils gegebenen Umständen in welcher Reihenfolge zu ergreifen sind. Der Normalfall gestaltet sich dabei wie folgt: Die Steuereinrichtung C erhält aus dem Programmspeicher auszuführende Befehle repräsentierende Daten, setzt diese gegebenenfalls in zur Hardware-Block-Konfigurierung geeignete Daten um, wählt einen Hardware-Block aus, in dem die durch die erhaltenen Daten repräsentierten Befehle zur Ausführung gebracht werden sollen, konfiguriert den betreffenden Hardware-Block, und setzt diesen in Betrieb, wodurch die betreffenden Befehle ausgeführt werden. Dieser Vorgang wird ständig wiederholt.

Die Ausführung des Programms kann unter Verwendung eines oder mehrerer Hardware-Blöcke erfolgen.

Im Fall der Ausführung des Programms durch mehrere Hardware-Blöcke können zwei oder mehrere Hardware-Blöcke auf Veranlassung durch die Steuereinrichtung direkt (über Verbindungen zwischen den betreffenden Hardware-Blöcken) oder indirekt (über die Steuereinrichtung) dynamisch so gekoppelt oder verschaltet werden, daß sie miteinander kooperieren können oder eine zusammenhängende, entsprechend leistungsfähigere Einheit bilden.

Die mehreren Hardware-Blöcke können aber auch unabhängig voneinander betrieben werden. So kann beispielsweise in einem der Hardware-Blöcke das Hauptprogramm ausgeführt werden, während in anderen Hardware-Blöcken Unterprogramme ausgeführt werden. Bei einer solchen Nutzung der Hardware-Blöcke ist zwar nur immer ein Hardware-Block in Betrieb (Hauptprogramm und Unterprogramm sind in der Regel nicht dazu ausgelegt, gleichzeitig ausgeführt zu werden), doch können der Einsprung vom Hauptprogramm ins Unterprogramm und der Rücksprung vom Unterprogramm ins Hauptprogramm wesentlich schneller bewerkstelligt werden als es sonst (bei herkömmlichen programmgesteuerten Einheiten) der Fall ist. Ein Sprung in ein Unterprogramm und der Rücksprung ins Hauptprogramm lassen sich nämlich einfach durch einen Wechsel des aktuell verwendeten Hardware-Blocks realisieren; das sonst erforderliche Transferieren von Daten zum oder vom Stack kann entfallen. Wenn der Hardware-Block, auf den umgeschaltet wird, schon oder noch zur Ausführung des darin auszuführenden Programms oder Programmteils (vor)konfiguriert ist, können der Sprung ins Unterprogramm und der Rücksprung ins Hauptprogramm sogar gänzlich ohne zeitliche Verzögerung erfolgen.

Mehrere Hardware-Blöcke können aber auch unabhängig voneinander gleichzeitig betrieben werden. Dabei können Programme oder Programmteile, die sich gegenseitig nicht beeinflussen (können), in verschiedenen Hardware-Blöcken gleichzeitig ausgeführt werden.

Dies kann sich beispielsweise in Multi-Tasking-Systemen als großer Vorteil erweisen, denn dadurch können Tasks, die sich gegenseitig nicht beeinflussen, in verschiedenen Hardware-Blöcken gleichzeitig ausgeführt werden. Daß einzelne, mehrere oder alle Tasks eines Multi-Tasking-Systems gleichzeitig, aber unabhängig voneinander in verschiedenen Hardware-Blöcken ausgeführt werden, erweist sich als vorteilhaft, weil dadurch die sehr aufwendigen und zeitraubenden Taskwechsel zumindest teilweise entfallen können. Wenn alle Tasks eines Multi-Tasking-Systems gleichzeitig in verschiedenen Hardware-Blöcken ausgeführt werden, kann sogar auf den sogenannten Scheduler verzichtet werden. Der Scheduler ist ein Software-Programm, das bei herkömmlichen programmgesteuerten Einheiten den Zeitpunkt von Task-Wechseln bestimmt und deren Durchführung veranlaßt und überwacht. Die Ausführung des (mit mehr oder weniger langen Unterbrechungen ständig auszuführenden) Scheduler-Programms beansprucht sehr viel Zeit; ein Verzicht auf das Scheduler-Programm oder eine Reduzierung der von diesem zu verwaltenden Tasks ist ein immenser Vorteil. Zwar arbeitet die programmgesteuerte Einheit dadurch nicht schneller, aber es kann die Anzahl der pro Zeiteinheit auszuführenden Scheduler-Programm-Befehle reduziert werden.

Wie vorstehend bereits erwähnt wurde, kann durch den Benutzer der programmgesteuerten Einheit (vorzugsweise programmgesteuert) individuell festgelegt werden, unter welchen Umständen (insbesondere im Ansprechen auf welche Ereignisse, wann und wie lange) welche Hardware-Blöcke wofür und in welcher Weise zu benutzen sind. Dadurch können die Aufgaben des Scheduler-Programms auch von der Steuereinrichtung C übernommen werden; die Steuereinrichtung C ist aufgrund ihrer Konfigurierbarkeit auch als Scheduler verwendbar. Durch die Verlagerung des bislang ausschließlich softwaremäßig realisierten Schedulers in die Hardware (in die Steuereinrichtung C der programmgesteuerten Einheit) kann auf die Ausführung des Scheduler-Programms unter allen Umständen gänzlich verzichtet werden, was aus den vorstehend genannten Gründen ein immenser Vorteil ist.

Es erweist sich als sehr großer Vorteil, wenn auch im Ansprechen auf interne oder externe Interrupt Requests auszuführende Interrupt Service Routinen in eigenen Hardware-Blöcken ausgeführt werden. Dann können auch die Interrupt Service Routinen ohne oder jedenfalls ohne nennenswerten Verwaltungsaufwand, also sofort oder innerhalb kürzester Zeit zur Ausführung gebracht werden.

Im Idealfall sind bestimmte Hardware-Blöcke ausschließlich für die Ausführung bestimmter Interrupt Service Routinen reserviert und - noch besser - schon für deren Ausführung vorkonfiguriert. Dadurch kann die betreffende Interrupt Service Routine oder zumindest ein Teil derselben sofort (ohne vorheriges Laden des betreffenden Programms aus dem Programmspeicher und ohne jede andere Verzögerung) zur Ausführung gebracht werden; es muß nur der betreffende Hardware-Block in Betrieb genommen werden. Dies ist selbst dann, wenn es nur ein mehr oder weniger kleiner Teil der Interrupt Service Routine ist, der sofort zur Ausführung gebracht werden kann, insbesondere bei sicherheitsrelevanten Anwendungen ein immenser Vorteil. Selbst in einem kleinen Teil der Interrupt Service Routine können für die Sicherheit des Systems erforderliche Maßnahmen wie beispielsweise das Abschalten einer bestimmten Systemkomponente ergriffen werden.

Die Interrupt Requests oder sonstige Ereignisse, bei deren Auftreten eine Interrupt Service Routine oder ein sonstiges Programm auszuführen ist, werden der Steuereinrichtung C über deren Eingangsanschlüsse E1 bis Eb signalisiert. Über eine entsprechende Konfiguration der Steuereinrichtung C kann durch den Benutzer der programmgesteuerten Einheit festgelegt werden, wie auf welches Ereignis zu reagieren ist (welches Programm im Ansprechen auf das jeweilige Ereignis zur Ausführung zu bringen ist, welcher Hardware-Block hierfür zu verwenden ist, ob der betreffende Hardware-Block bereits vorkonfiguriert ist, ob die anderen Hardware-Blöcke parallel weiterarbeiten dürfen oder angehalten werden müssen etc.).

Es kann auch vorgesehen werden, die auszuführenden Programme oder ausgewählte Programmteile gleichzeitig in mehreren Hardware-Blöcken (beispielsweise in drei Hardware-Blöcken) ablaufen zu lassen. Dadurch kann die programmgesteuerte Einheit selbst dann noch verwendet werden, wenn ein oder mehrere Hardware-Blöcke fehlerhaft sind.

Ob und gegebenenfalls welche Programme, Programmteile, Tasks, Interrupt Service Routinen gleichzeitig in wie vielen und gegebenenfalls in welchen Hardwareblöcken auszuführen sind, kann wiederum durch eine entsprechende Konfiguration der Steuereinrichtung C bestimmt werden.

Die gleichzeitige Ausführung eines Programmes in mehreren Hardware-Blöcken kann auch für einen Selbsttest der programmgesteuerten Einheit verwendet werden.

Beim Selbsttest oder im normalen Betrieb der programmgesteuerten Einheit als fehlerhaft erkannte Hardware-Blöcke werden vorzugsweise automatisch von der Verwendung ausgeschlossen. Die programmgesteuerte Einheit kann aber dennoch weiter verwendet werden.

Sämtliche vorstehenden allgemeinen und speziellen Erläuterungen zur sequentiellen oder parallelen Ausführung von Programmen, Unterprogrammen, Programmteilen, Tasks und Interrupt Requests in einem oder mehreren Hardware-Blöcken gelten uneingeschränkt auch für alle nicht explizit erwähnten Einheiten wie beispielsweise die sogenannten Threads (Programmfäden) oder Thread-Wechsel (Programmfaden-Wechsel).

Aus den vorstehenden Erläuterungen geht hervor, daß eine wie beschrieben aufgebaute und betriebene programmgesteuerte Einheit herkömmlichen programmgesteuerten Einheiten in vielfacher Hinsicht deutlich überlegen ist. Sie kann insbesondere auch diejenigen Phasen sehr schnell durchlaufen, die bei den derzeit bekannten programmgesteuerten Einheiten nur vergleichsweise sehr langsam durchlaufen werden.

### Bezugszeichenliste:

- 44: integer register file

- AUx: arithmetische Einheit
- CUA: Vergleichs-Einheit des ersten Typs
- CUBx: Vergleichs-Einheit des zweiten Typs
- DEMUX: Demultiplexer
- MUXAx: Multiplexer des ersten Typs
- MUXB: Multiplexer des zweiten Typs
- TGU: Taktgenerierungs-Einheit
- SU: Signalisierungs-Einheit

- MCLK: Master-Takt
- ENABLE: Enable-Signal
- READY: Ready-Signal des Hardware-Blocks

- LPL: Load-Pipeline
- SPL: Store-Pipeline

## Patentansprüche

1. Programmgesteuerte Einheit,
**dadurch gekennzeichnet,**
daß diese mehrere konfigurierbare Hardware-Blöcke (UCB1-UCBn) zur Ausführung von Befehlen oder Befehlsfolgen aufweist.

2. Programmgesteuerte Einheit nach Anspruch 1,
**dadurch gekennzeichnet,**
daß die Hardware-Blöcke (UCB1-UCBn) dynamisch so konfigurierbar sind, daß bei deren Inbetriebnahme ein Befehl oder eine mehrere Befehle umfassende Befehlsfolge ausgeführt werden.

3. Programmgesteuerte Einheit nach Anspruch 1 oder 2,
**dadurch gekennzeichnet,**
daß die Hardware-Blöcke (UCB1-UCBn) unabhängig voneinander konfigurierbar und betreibbar sind.

4. Programmgesteuerte Einheit nach einem der vorhergehenden Ansprüche,
**dadurch gekennzeichnet,**
daß mehrere Hardware-Blöcke (UCB1-UCBn) dynamisch so koppelbar sind, daß sie miteinander kooperieren können.

5. Programmgesteuerte Einheit nach einem der vorhergehenden Ansprüche,
**dadurch gekennzeichnet,**
daß mehrere Hardware-Blöcke (UCB1-UCBn) dynamisch so verschaltbar sind, daß sie eine zusammenhängende Einheit bilden.

6. Programmgesteuerte Einheit nach einem der vorhergehenden Ansprüche,
**dadurch gekennzeichnet,**
daß die Hardware-Blöcke (UCB1-UCBn) durch eine Steuereinrichtung (C) gesteuert werden.

7. Programmgesteuerte Einheit nach Anspruch 6,
**dadurch gekennzeichnet,**
daß die Steuereinrichtung (C) festlegt, wann, wie lange, wofür und/oder wie die einzelnen Hardware-Blöcke (UCB1-UCBn) verwendet werden.

8. Programmgesteuerte Einheit nach Anspruch 6 oder 7,
**dadurch gekennzeichnet,**
daß die Steuereinrichtung (C) als Scheduler verwendbar ist, durch welchen festgelegt wird, wann und/oder wie lange welche Programme oder Programmteile auszuführen sind.

9. Programmgesteuerte Einheit nach einem der Ansprüche 6 bis 8,
**dadurch gekennzeichnet,**
daß die Steuereinrichtung (C) Eingangsanschlüsse (D1-Da) aufweist, über welche ihr Daten zugeführt werden, die in den Hardware-Blöcken (UCB1-UCBn) auszuführende Befehle repräsentieren.

10. Programmgesteuerte Einheit nach Anspruch 9,
**dadurch gekennzeichnet,**
daß die Steuereinrichtung (C) die Hardware-Blöcke (UCB1-UCBn) basierend auf den eingegebenen Daten oder unter Verwendung derselben konfiguriert.

11. Programmgesteuerte Einheit nach einem der Ansprüche 6 bis 10,
**dadurch gekennzeichnet,**
daß die Steuereinrichtung (C) weitere Eingangsanschlüsse (E1-Eb) aufweist, über welche ihr interne und/oder externe Ereignisse signalisiert werden.

12. Programmgesteuerte Einheit nach Anspruch 11,
**dadurch gekennzeichnet,**
daß die internen und/oder externen Ereignisse Interrupt Requests sind.

13. Programmgesteuerte Einheit nach Anspruch 11 oder 12,
**dadurch gekennzeichnet,**
daß die Steuereinrichtung (C) im Ansprechen auf das Auftreten eines internen und/oder externen Ereignisses die Ausführung eines zugeordneten Programms veranlaßt.

14. Programmgesteuerte Einheit nach Anspruch 13,
**dadurch gekennzeichnet,**
daß das zugeordnete Programm in einem eigenen Hardware-Block (UCB1-UCBn) ausgeführt wird.

15. Programmgesteuerte Einheit nach einem der Ansprüche 6 bis 14,
**dadurch gekennzeichnet,**
daß die Steuereinrichtung (C) bestimmte Hardware-Blöcke (UCB1-UCBn) für die Ausführung bestimmter Programme reserviert.

16. programmgesteuerte Einheit nach Anspruch 15,
**dadurch gekennzeichnet,**
daß die Steuereinrichtung (C) für die Ausführung bestimmter Programme reservierte Hardware-Blöcke (UCB1-UCBn) vorkonfiguriert.

17. Programmgesteuerte Einheit nach einem der Ansprüche 6 bis 16,
**dadurch gekennzeichnet,**
daß die Steuereinrichtung (C) die Hardware-Blöcke (UCB1-UCBn) so ansteuert, daß verschiedene Programme und/oder verschiedene Teile eines Programms durch verschiedene Hardware-Blöcke ausgeführt werden.

18. Programmgesteuerte Einheit nach einem der Ansprüche 6 bis 17,
**dadurch gekennzeichnet,**
daß die Steuereinrichtung (C) die Hardware-Blöcke (UCB1-UCBn) so ansteuert, daß verschiedene Tasks durch verschiedene Hardware-Blöcke ausgeführt werden.

19. Programmgesteuerte Einheit nach einem der Ansprüche 6 bis 18,
**dadurch gekennzeichnet,**
daß die Steuereinrichtung (C) die Hardware-Blöcke (UCB1-UCBn) so ansteuert, daß an verschiedenen Programmteilen, Programmen und/oder Tasks arbeitende Hardware-Blöcke abwechselnd betrieben werden.

20. Programmgesteuerte Einheit nach einem der Ansprüche 6 bis 19,
**dadurch gekennzeichnet,**
daß die Steuereinrichtung (C) die Hardware-Blöcke (UCB1-UCBn) so ansteuert, daß an verschiedenen Programmteilen, Programmen und/oder Tasks arbeitende Hardware-Blöcke gleichzeitig betrieben werden.

21. Programmgesteuerte Einheit nach einem der Ansprüche 6 bis 20,
**dadurch gekennzeichnet,**
daß die Steuereinrichtung (C) die Hardware-Blöcke (UCB1-UCBn) so ansteuert, daß mehrere Hardware-Blöcke die selben Programmteile, Programme und/oder Tasks ausführen.

22. Programmgesteuerte Einheit nach einem der Ansprüche 6 bis 21,
**dadurch gekennzeichnet,**
daß die Steuereinrichtung (C) eine durch den Benutzer der programmgesteuerten Einheit individuell konfigurierbare Hardware ist.

23. Programmgesteuerte Einheit nach Anspruch 22,
**dadurch gekennzeichnet,**
daß durch die Konfiguration der Steuereinrichtung (C) festlegbar ist, wann, wie lange, wofür und/oder wie die einzelnen Hardware-Blöcke (UCB1-UCBn) verwendet werden und/oder wann und/oder wie lange welche Programmteile, Programme und/oder Tasks auszuführen sind.
